Europäisches Patentamt

European Patent Office

Office européen des brevets

(19)

(11) Veröffentlichungsnummer: **0 109 455**

**A1**

(12) # EUROPÄISCHE PATENTANMELDUNG

(21) Anmeldenummer: **82110687.9**

(51) Int. Cl.³: **B 62 K 19/00**

(22) Anmeldetag: **19.11.82**

(43) Veröffentlichungstag der Anmeldung:
**30.05.84 Patentblatt 84/22**

(84) Benannte Vertragsstaaten:
**AT BE CH DE FR GB IT LI LU NL SE**

(71) Anmelder: **Keller, Roland**
**Hauptstrasse 68**
**CH-8592 Uttwil(CH)**

(72) Erfinder: **Keller, Roland**
**Hauptstrasse 68**
**CH-8592 Uttwil(CH)**

(74) Vertreter: **Blum, Rudolf Emil Ernst et al,**
**c/o E. Blum & Co Patentanwälte Vorderberg 11**
**CH-8044 Zürich(CH)**

(54) **Muskelgetriebenes, einspuriges Zweirad mit Tretkurbel und einem Rahmen aus Kunststoff oder Aluminium.**

(57) Ein Rahmen aus kunststoff oder Aluminium weist einen mittleren, hohlkastenförmigen Teil (1) sowie zwei mit diesem verbundene, seitlich ausserhalb der Tretebene verlaufende Versteifungsglieder (4) auf. Der hohlkastenförmige Teil (1) bestizt einen vorderen geschlossenen Hohlkasten (2), in welchen ein Steuerkopfrohr (5) sowie ein Tretlager eingegossen sind, sowie eine hintere Tragstruktur (3), worin das Hinterrad (11) sowie eine Sattelstütze (10) befestigt sind. Die Verkleidung (13) ist bedingter Teil der Rahmenkonstruktion, welche die aerodynamischen Eigenschaften verbessert. Die Rahmenausbildung zusammen mit der Verkleidung erlaubt es, eine leichtgewichtige, biege- und torsionssteife Struktur zu erzielen, in welche die Verkleidung integriert werden kann.

EP 0 109 455 A1

./...

*Fig.1*

*Fig. 2*

- 1 -

Muskelgetriebenes, einspuriges Zweirad mit Tretkurbel und einem Rahmen aus Kunststoff oder Aluminium
- - - - - - - - - - - - - - - - - - - - - - - - - - - - - - -

Die Erfindung betrifft ein muskelgetriebenes,
einspuriges Zweirad mit Tretkurbel und einem Rahmen aus
Kunststoff oder Aluminium. Fahrräder herkömmlicher Bauart
weisen vor allem aus Stabilitätsgründen meist Metallrohrrahmen auf. In neuerer Zeit sind entsprechende Konstruktionen aus hochfesten, nicht metallischen Materialien, wie
Kohlenstoff-Fasern usw., bekannt geworden. Bei beiden Konstruktionsweisen sind aerodynamische Gegebenheiten und
Wetterschutz zu wenig berücksichtigt worden. Ferner ist die
Metallrahmenkonstruktion, soll sie leichgewichtig ausgebildet sein, sehr kostspielig und wartungsintensiv.

Es stellt sich die Aufgabe, ein Zweirad der eingangs genannten Art zu schaffen, das die erläuterten Nachteile nicht aufweist und trotz leichtgewichtiger Ausbildung
gute mechanische Stabilität besitzt.

Dies wird erfindungsgemäss dadurch erreicht, dass
der Rahmen einen mittleren hohlkastenförmigen Teil sowie
zwei mit diesem verbundene, seitlich ausserhalb der Tretebene angeordnete Versteifungsglieder und eine Verschalung
aufweist.

Die Versteifungsglieder gehen vorzugsweise zumindest an der Vorderseite in eine Verkleidung zur Verminderung des Luftwiderstandbeiwertes des Zweirads über.

Die erfindungsgemässe Ausbildung hat den Vor-

- 2 -

teil, dass trotz der Verwendung von Kunststoff als Baumaterial ein torsionssteifer, leichter Rahmen erzielbar ist.

Nachfolgend wird ein Ausführungsbeispiel der Erfindung anhand der beigefügten Zeichnung beschrieben. Darin zeigen:

Fig. 1 eine Draufsicht auf ein erfindungsgemässes Zweirad;

Fig. 2 eine schematische Schnittansicht entlang der Linie II-II in Fig. 1;

Fig. 3 eine Seitenansicht des Zweirads;

Fig. 4 eine Schnittansicht, teilweise abgebrochen, entlang der Linie IV-IV in Fig. 3;

Fig. 5 eine Schnittansicht entlang der Linie V-V in Fig. 3, und

Fig. 6 eine Schnittansicht entlang der Linie VI-VI in Fig. 3.

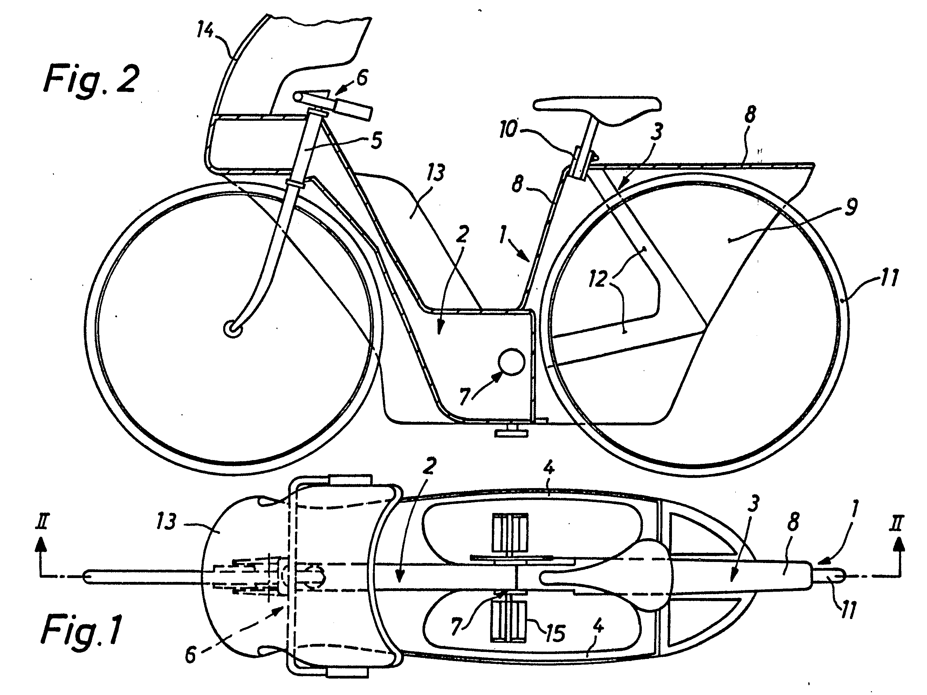

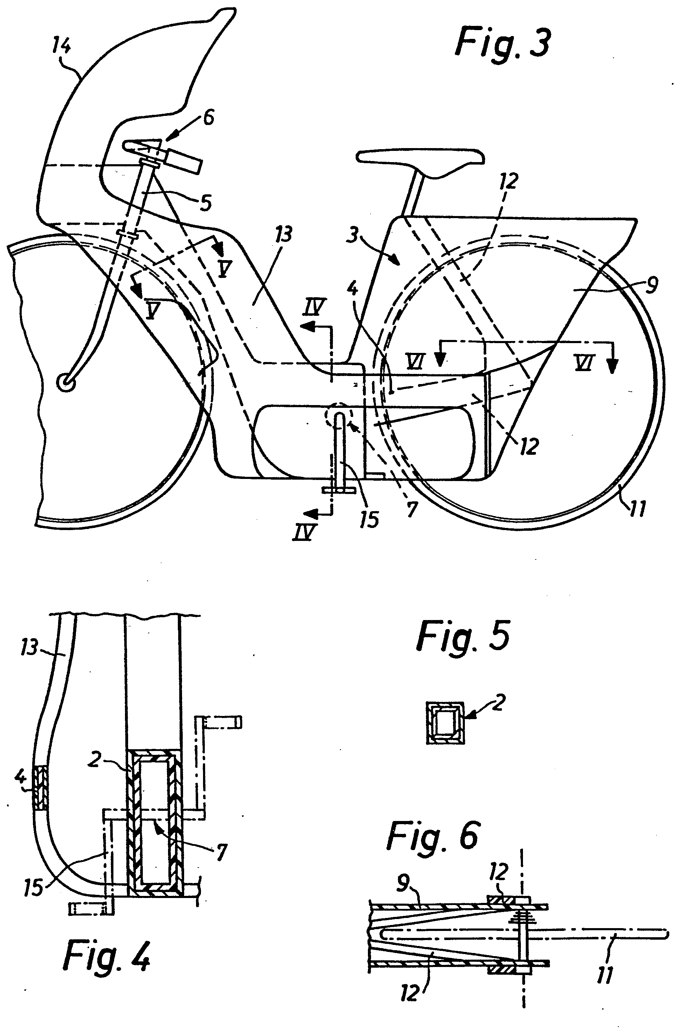

Wie am besten aus Fig. 2 ersichtlich ist, besitzt der Rahmen des Zweirads einen mittleren, hohlkastenförmigen Teil 1, der vorn einen geschlossenen Hohlkasten 2 und damit verbunden eine hintere Tragstruktur 3 besitzt. Seitlich ausserhalb der Tretebene sind zudem zwei Versteifungsglieder 4 angeordnet (Fig. 1,3). Der Hohlkasten 2, die hintere Tragstruktur 3 und die Versteifungsglieder 4 zusammen mit der Verkleidung 13 bilden als Rahmen einen einstückigen, verwindungs- und biegesteifen Körper, an welchem die restlichen Elemente des Zweirads angeordnet sind. Im Hohlkasten 2 ist ein Steuerkopfrohr 5 zur Aufnahme des Lenkers 6 sowie ein Tretlager 7 (Fig. 4) eingegossen. Die hintere Tragstruktur 3, welche zwei über Stege 8 verbundene Seitenwände 9 aufweist, trägt eine Sattelstütze 10 und dient zur Befestigung des Hinterrades 11. An den Seitenwänden sind Verstärkungszonen 12 angeordnet, welche zwischen der Hinterachsbefestigung einerseits und der Sattelstütze 10 sowie dem Bereich des Tretlagers 7 andererseits verlaufen. Die Verstärkungszonen 12 sind aus mehreren GFK-Schichten oder in Honigwabenkonstruktion gebildet und stellen zusammen mit der restlichen Tragstruktur 3 die Stabilität des Hinterradbereichs sicher, während der Hohlkasten 2 und die Versteifungsglieder 4 mit der Verkleidung 13 die Kräfte im Vorderradbereich aufnehmen.

Tragstruktur 3 und Hohlkasten 2 sind einstückig ausgebildet und zudem über die seitlichen Versteifungsglieder 4 miteinander verbunden. Letzteres gibt der Struktur eine gute Torsionsversteifung. Die Versteifungsglieder 4 gehen vorn in eine Verkleidung 13 über, welche aerodynamisch derart ausgebildet ist, dass der Luftwiderstand des Zweirades mit Fahrer reduziert wird, und die insbesondere Knieabdeckungen aufweist. Im Sehfeld des Fahrers kann zudem eine entsprechende Windschutzscheibe 14 angeordnet sein, die aus durchsichtigem Kunststoff gefertigt sein kann. Im Bereich der Tretkurbel 15 sind die Versteifungsglieder 4 als parallel zur Tretebene verlaufende, flache Leisten ausgebildet (Fig. 3,4), welche einen relativ kleinen Durchmesser aufweisen. Sie lassen nach oben und unten sowie seitlich ausreichenden Freiraum offen, damit jede Behinderung des Fahrers entfällt. Der Fahrer kann beim Anhalten ohne weiteres ausserhalb der Versteifungsglieder 4 mit den Füssen den Boden berühren. Im Bereich des Hinterrades 11 dient die Tragstruktur 9 zugleich als aerodynamisch günstige Radabdeckung, welche wie auch die vordere Verkleidung 13 zugleich als Spritzschutz wirken und damit die Anordnung spezieller Schutzbleche unnötig machen. Durch die tiefe Anordnung des Hohlkastens 2 im Bereich der Tretkurbel 15 kann dieselbe Ausführung sowohl als Herren- wie auch als Damenzweirad Verwendung finden. Der Antriebsteil, welcher herkömmlicherweise als Kettenantrieb auf die Hinterachse ausgebildet ist, braucht nicht näher erläutert zu werden.

Das für den Rahmen verwendete Material besteht aus glasfaserverstärktem Kunststoff oder Aluminium und ist im Bereich des Hohlkastens 2 sowie der Versteifungsglieder mehrschichtig, unter Verwendung einer Hartschaumlage oder Honigwabenkonstruktion aufgebaut, wie aus Fig. 4 und 5 schematisch hervorgeht. Diese sogenannte Sandwichbauweise erlaubt die Erzielung maximaler Stabilität bei minimalem Gewicht. Einer äusseren Verkleidungsschicht können in bekannter Weise Farbpigmente beigemischt sein, sodass eine spezielle Lackierung entfällt.

Zubehörteile, wie Gepäckträger, Saccochen, usw. können ohne weiteres in den Kunststoff- oder Aluminiumaufbau integriert sein. Insbesondere der Gepäckträger kann Teil der hinteren Tragstruktur 3 sein und die Funktion eines Steges 8 haben.

Das beschriebene Zweirad kann sehr leicht, etwa im Gewichtsbereich heutiger Rennvelos gebaut werden, ohne an Stabilität einzubüssen. Die aerodynamisch günstige Ausgestaltung der Verkleidung bewirkt besonders bei höheren Fahrgeschwindigkeiten eine merkliche Abnahme des Fahrtwiderstandes.

P a t e n t a n s p r ü c h e
-----------------------------

1. Muskelgetriebenes, einspuriges Zweirad mit Tretkurbel und einem Rahmen aus Kunststoff oder Aluminium, dadurch gekennzeichnet, dass der Rahmen einen mittleren, hohlkastenförmigen Teil (1) sowie zwei mit diesem verbundene, seitlich ausserhalb der Tretebene angeordnete Versteifungsglieder (4) und eine Verkleidung (13) aufweist.

2. Zweirad nach Anspruch 1, dadurch gekennzeichnet, dass der hohlkastenförmige Teil einen im wesentlichen geschlossenen Hohlkasten (2) zur Aufnahme eines Tretlagers (7) und eines Steuerkopfrohres (5) sowie eine damit verbundene Tragstruktur (3) für Hinterradachse und Sattelstütze (10) aufweist.

3. Zweirad nach Anspruch 2, dadurch gekennzeichnet, dass die Tragstruktur zwei mittels Stegen (8) verbundene Seitenwände (9) besitzt, wobei an den Seitenwänden (9) Verstärkungszonen (12) angeordnet sind, die sich im wesentlichen zwischen Hinterachsbefestigung und Sattelstütze (10) sowie Tretlagerbereich (7) erstrecken.

4. Zweirad nach Anspruch 1, dadurch gekennzeichnet, dass die seitlichen Versteifungsglieder (4) mindestens an der Vorderseite in die Verkleidung (14) zur Verminderung des Luftwiderstandsbeiwertes sowie zur Verminderung der Torsion übergehen.

5. Zweirad nach Anspruch 4, dadurch gekennzeichnet, dass die Verkleidung mindestens je eine Knieabdeckung aufweist.

6. Zweirad nach Anspruch 1, dadurch gekennzeichnet, dass die seitlichen Versteifungsglieder (4) im Bereich der Tretkurbel (15) als parallel zur Tretebene verlaufende, flache Leisten ausgebildet sind, um die Bewegungsfreiheit eines Fahrers zu gewährleisten.

7. Zweirad nach Anspruch 1, dadurch gekennzeichnet, dass der Rahmen bereichsweise in Schichtbauweise aus glasfaserverstärktem Kunststoff und Hartschaum oder mit wabenförmigem Kern aufgebaut ist.

8. Zweirad nach Anspruch 7, dadurch gekennzeichnet, dass die seitlichen Versteifungsglieder (4) in Schichtbauweise aufgebaut sind.

9. Zweirad nach Anspruch 3, dadurch gekennzeichnet, dass ein Gepäckträger Teil der Stege (8) bildet.

10. Zweirad nach Anspruch 1 und 4, dadurch gekennzeichnet, dass der Rahmen bzw. die Verkleidung derart ausgebildet sind, dass sie Radschmutzfänger bilden.

0109455

1/2

Fig. 2

Fig. 1

**Fig. 3**

**Fig. 5**

**Fig. 4**

**Fig. 6**

**Europäisches Patentamt**

## EUROPÄISCHER RECHERCHENBERICHT

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| X | CH-A- 241 567 (ISAAC)<br><br>* Figur 1; Seite 2, Zeilen 58-75; Figur 13; Seite 7, Zeilen 91-94; Seite 1, Zeilen 23-30 *<br><br>--- | 1,2,5, 9,10 | B 62 K   19/00 |
| A | US-A-4 230 332 (PORSCHE)<br>*  Spalte 1, Zeile 50 - Spalte 2, Zeile 19 *<br><br>----- | 1-3,7 | |
| | | | RECHERCHIERTE SACHGEBIETE (Int. Cl. ³)<br><br>B 62 K |

Der vorliegende Recherchenbericht wurde für alle Patentansprüche erstellt.

| Recherchenort<br>DEN HAAG | Abschlußdatum der Recherche<br>23-02-1983 | Prüfer<br>GEMMELL R.I.D. |
|---|---|---|